# FASCICULE DE BREVET EUROPEEN

(11) **EP 0 630 189 B1**
(45) Date de publication et mention de la délivrance du brevet: **21.01.1998**
(21) Numéro de dépôt: 93918749.8
(22) Date de dépôt: 12.03.1993
(51) Int. Cl.: A23L 1/24

(54) **SAUCE ALIMENTAIRE DE TYPE MAYONNAISE, PROCEDE DE PREPARATION D'UNE TELLE SAUCE ET PREPARATION ALIMENTAIRE LA CONTENANT**
MAYONNAISEÄHNLICHE SOSSE, VERFAHREN ZUR HERSTELLUNG DERSELBEN UND DIESE ENTHALTENDES NÄHRUNGSMITTELPRÄPARAT
MAYONNAISE-TYPE EDIBLE SAUCE, METHOD FOR PREPARING THE SAUCE, AND FOOD COMPOSITION CONTAINING SAME

(30) Priorité: 13.03.1992 FR 9203186
(43) Date de publication de la demande: 28.12.1994
(73) Titulaire: ECO-CONDIMENTS, 35160 Monterfil (FR)
(72) Inventeur: Lecoindre, Gérard, F-49270 Landemont (FR)
(74) Mandataire: Phélip, Bruno
(86) Numéro de dépôt international: FR9300252
(87) Numéro de publication internationale: WO9317584

(56) Documents cités:
- EP-A- 0 123 649
- EP-A- 0 134 196
- EP-A- 0 380 293
- FR-A- 2 243 651
- J.KAMSTEEG ET AL. 'E = eetbaar' 1986 , H.J.W.BECHT , AMSTERDAM page 105
- P.MONTAGNE 'Nouveau Larousse Gatronomique' 1981 , LIBRAIRIE LAROUSSE , PARIS pages 941,942

## Description

La présente invention concerne une sauce alimentaire de type mayonnaise et son procédé de préparation. Elle concerne également les préparations alimentaires qui comprennent une telle sauce.

Dans le domaine alimentaire, de nombreux plats, parfois très différents les uns des autres, sont accommodés d'une sauce froide consistante, appelée "mayonnaise". Cette sauce est habituellement composée d'une émulsion d'huile et de jaune d'oeuf accompagnée, selon les goûts du consommateur, de condiments (sel, poivre ...), de moutarde, de vinaigre et/ou solution d'acide acétique. De par sa consistance et sa coloration, la sauce mayonnaise est souvent utilisée pour la décoration des plats ; on l'emploie également bien évidemment pour son goût et sa saveur, en vue d'agrémenter certaines préparations.

Les défauts des mayonnaises classiques découlent essentiellement de la présence de jaune d'oeuf et notamment de certains constituants du jaune d'oeuf, qui sont plus ou moins bien tolérés par l'organisme.

Les mayonnaises classiques contiennent en effet du cholestérol, graisse saturée dont l'excès sanguin est un facteur de risque cardiovasculaire et qui, en outre, entre dans la composition des calculs de la vésicule biliaire. Leur consommation est de ce fait souvent déconseillée ou même interdite aux nombreuses personnes qui doivent suivre un régime "hypocholestérolémiant".

Ces mayonnaises sont également souvent indigestes, en particulier pour les personnes porteuses de gastrite, de troubles du fonctionnement de la vésicule biliaire (vésicule paresseuse, hypertonique, calculs biliaires) ou ayant subi une choleczotectémie (suppression de la vésicule biliaire). Elles peuvent encore provoquer des allergies chez les gens prédisposés (eczéma, urticaire, asthme, diarrhée, migraine ...).

Le but de la présente invention est de proposer un produit alimentaire ayant sensiblement la consistance, le goût et l'aspect de la sauce mayonnaise, mais qui ne contient pas de jaune d'oeuf.

Un autre but de l'invention est de proposer une sauce alimentaire de type mayonnaise qui limite les risques d'intolérance pour l'organisme et qui, par le fait, soit accessible à un plus grand nombre de personnes.

Cette sauce alimentaire de type mayonnaise consiste en une émulsion comportant :
- de l'huile : 70 à 80 % en poids
- de la moutarde : 4 à 10 % en poids
- du blanc d'oeuf : 1 à 15 % en poids
- et un agent émulsifiant : 0,1 à 10 % en poids la somme de ces différents constituants étant égale à 100 % en poids.

On peut également éventuellement incorporer dans cette préparation :
- du vinaigre, acide acétique ou jus de citron : 0 à 6 % en poids
- des condiments, épices, substances aromatisantes ou similaires : 0 à 5 % en poids
- de l'amidon (agent épaississant) : 0 à 1 % en poids
- du dextrose : 0 à 1 % en poids
- de l eau : 0 à 16 % en poids
- des agents conservateurs et autres, dans des quantités et proportions classiques du domaine.

L'huile utilisée consiste avantageusement en une huile végétale telle qu'une huile de colza, de tournesol, de soja, d'arachide ou de pépin de raisin. Ce type de produit convient en effet très bien pour obtenir une mayonnaise de qualité ; de plus, ces huiles sont riches en graisses insaturées et ont un effet bénéfique sur la santé.

La présence de moutarde est essentielle pour assurer le liant de la sauce et conférer de la saveur au produit. Le ou les types de moutarde utilisés seront notamment choisis en fonction des critères ci-dessus et également selon les goûts du consommateur. En outre, ce constituant comporte généralement du dioxyde de soufre (SO2) et joue un rôle de conservateur non négligeable.

Le type d'oeuf à partir duquel on va soutirer le blanc utilisé dans notre sauce sera normalement, et de façon classique, un oeuf de poule. On peut utiliser du blanc d'oeuf en poudre hydraté par une quantité d'eau adaptée pour reconstituer le produit naturel.

L'agent émulsifiant utilisé pourra être du type mono et diglycéride (E471) ou du type sucroester (E473).

Les constituants de base du produit alimentaire selon l'invention sont l'huile, la moutarde, le blanc d'oeuf et l'agent émulsifiant.
Comme on le fait traditionnellement pour ce type de produit, il est tout à fait possible d'ajouter, à cette émulsion de base, une petite proportion de vinaigre destiné à relever le goût du produit fini. En outre, la coloration éventuelle de ce constituant influera favorablement l'aspect de la préparation. D'autre part, le vinaigre peut très bien être remplacé par une solution d'acide acétique ou de jus de citron.

Il est également possible d'agrémenter et de compléter la préparation par des condiments, épices, arômes naturels ou autres, tels que le sel, le poivre, l'ail, l'estragon...

D'autre part, on peut ajouter un agent épaississant de nature adaptée à l'utilisation (amidons, guard, caroube, gommes arabiques, xanthanes, etc ...), pour assouplir la préparation, et du dextrose (sucre réducteur) pour lui donner de la tenue et de la consistance, de façon neutre.

La préparation de cette sauce de type mayonnaise est réalisée en mélangeant le blanc d'oeuf, la moutarde et l'agent émulsifiant selon des quantités fonction des proportions ci-dessus et du volume de produit fini que l'on désire obtenir. Dans le cadre d'une préparation ménagère, ce mélange est brassé quelques secondes, au fouet ou au batteur électrique (dans ce dernier cas, on choisira de préférence une vitesse lente de brassage, de l'ordre de 650 tours/mn par exemple).
Lorsque l'on arrive à une mixture relativement homogène, le batteur est réglé sur une vitesse de brassage rapide (1150 tours/mn environ), et on incorpore progressivement l'huile végétale. Ce brassage à vitesse rapide est réalisé jusqu'à l'obtention d'une sauce qui se tienne et qui se présente selon la quantité désirée.
Pour une consommation ménagère, le brassage rapide peut être réalisé pendant un laps de temps de l'ordre de 30 s à 1 mn.

Les constituants "facultatifs" tels que le vinaigre, les condiments, le dextrose, l'agent épaississant, les arômes et autres ... sont de préférence ajoutés intégralement à la préparation, avant ou pendant la première phase de brassage à vitesse lente.

Ce procédé de fabrication devra bien entendu être adapté si on désire le réaliser industriellement ; cette adaptation sera notamment essentiellement liée aux grandes quantités de sauce à préparer.
En outre, dans ce dernier cas, il sera éventuellement nécessaire, ou tout au moins préférable, de rajouter des colorants et/ou conservateurs qui permettront, après conditionnement, de rendre le produit commercialisable.

Tous les constituants qui entrent dans la composition de la sauce alimentaire selon l'invention devront être autorisés, dans leur nature et leurs proportions, par les normes et les réglementations en vigueur.

On a obtenu de très bons résultats quant à la consistance, au goût, à l'aspect et à l'odeur, en réalisant une émulsion constituée :
- d'huile végétale : 75 à 79 % en poids
- de moutarde : 6 à 9 % en poids
- de blanc d'oeuf : 3 à 10 % en poids
- d'agent émulsifiant : 0,3 à 1 % en poids
- de vinaigre, acide acétique ou jus de citron : 0 à 6 % en poids
- de condiments ou autres : 0 à 5 % en poids
- d'eau : 0 à 10 % en poids
- d'agent épaississant (amidon de manioc) : 0 à 1 % en poids
- de dextrose : 0 à 1 % en poids.

Plus précisément, on obtient 100 gr d'une sauce de type mayonnaise, de qualité très satisfaisante en utilisant :
- 77 gr environ d'huile végétale
- 8 gr environ de moutarde
- 5,6 gr environ de blanc d'oeuf
- 0,5 gr d'agent émulsifiant (E471)
- 0,2 gr d'amidon de manioc
- 7,8 gr d'eau
- 0,3 gr environ de sel, poivre et épices
- 0,6 gr de dextrose.

Bien entendu, une telle sauce peut très bien être utilisée pour servir de constituant de base en vue de réaliser des préparations alimentaires plus complexes. A titre d'exemple, on pourra tout à fait l'utiliser, en association avec des épices et herbes hachées, pour obtenir une sauce de type "tartare" ; dans le même ordre d'idée, il sera possible de l'employer pour obtenir des sauces de type "américaine", "aioli" ou "béarnaise".

La sauce de type mayonnaise selon l'invention a la consistance, le goût et l'aspect des mayonnaises classiques. Elle se tient très bien et ne tombe pas, même au bout de trois jours, à température ambiante.

Cette sauce présente en outre l'avantage d'être très diététique. En effet, elle ne contient pas de cholestérol ; elle est exceptionnellement bien tolérée sur le plan digestif et la présence de graisses insaturées dans l'huile utilisée est très bénéfique pour la santé. Cette sauce est en outre très économique : sa technique très simple de fabrication, l'emploi d'un "sous-produit" de l'oeuf et l'utilisation d'une huile alimentaire peu onéreuse assurent un coût de production relativement faible.

D'autre part, elle présente le grand avantage de pouvoir être congelée. A une température de l'ordre de - 18°C, elle passe d'une phase semi-liquide (crémeuse) a une phase solide ; après congélation, à température ambiante, elle reprend sa forme semi-liquide, sans pour autant que son goût et sa couleur soient altérés.
En se référant à la réglementation en vigueur, une telle sauce peut très bien être utilisée en relation avec des plats préparés congelés ; ainsi, le consommateur n'aurait pas besoin de réaliser et de rajouter la sauce mayonnaise juste avant de servir, comme on doit le faire avec les mayonnaises classiques.

D'autre part, elle accepte le passage au four sans se décomposer et elle convient ainsi très bien à la préparation de canapés, par exemple.

Il est également possible de réaliser son conditionnement sous vide pour assurer une conservation longue durée. On prendra également soin, dans ce cas, de se référer à la législation en vigueur dans ce domaine.

Une telle sauce de type mayonnaise, sans jaune d'oeuf, peut très bien trouver sa place dans le réseau commercial actuel, notamment en liaison avec un environnement ou on assiste au développement et au succès des condiments "prêts à l'emploi" et des produits diététiques.
Etant donné sa constitution particulière, on peut la définir comme un "succédané diététique de la classique mayonnaise".

## Revendications

1. Sauce alimentaire de type mayonnaise, caractérisée en ce qu'elle consiste en une émulsion comportant :
- de l'huile : 70 à 80 % en poids
- de la moutarde : 4 à 10 % en poids
- du blanc d'oeuf : 1 à 15 % en poids
- un agent émulsifiant : 0,1 à 10 % en poids la somme de ces différents constituants étant égale à 100 % en poids.

2. Sauce alimentaire de type mayonnaise selon la revendication 1, caractérisée en ce qu'elle comporte également :
- du vinaigre, acide acétique ou jus de citron : 0 à 6 % en poids
- des condiments, épices, substances aromatisantes ou similaires : 0 à 5 % en poids
- un agent épaississant (amidon de manioc par exemple à raison de 0 à 1 % en poids)
- du dextrose ou similaire : 0 à 1 % en poids
- de l'eau : 0 à 16 % en poids.

3. Sauce alimentaire de type mayonnaise selon l'une quelconque des revendications 1 ou 2, caractérisée en ce qu'elle est constituée :
- d'huile végétale : 75 à 79 % en poids
- de moutarde : 6 à 9 % en poids
- de blanc d'oeuf : 3 à 10 % en poids
- d'agent émulsifiant : 0,3 à 1 % en poids
- de vinaigre, acide acétique ou jus de citron : 0 à 6 % en poids
- de condiments ou similaires : 0 à 5 % en poids
- d'eau : 0 à 10 % en poids
- d'agent épaississant (amidon de manioc) : 0 à 1 % en poids
- de dextrose : 0 à 1 % en poids.

4. Sauce alimentaire de type mayonnaise selon l'une quelconque des revendications 1 à 3, caractérisée en ce qu'elle est constituée :
- d'huile végétale : 77 % environ en poids
- de moutarde : 8 % environ en poids
- de blanc d'oeuf : 5,6 % environ en poids
- d'agent émulsifiant : 0,5 % environ en poids
- d'amidon de manioc : 0,2 % environ en poids
- d'eau : 7,8 % environ en poids
- de sel et poivre : 0,3 % environ en poids
- du dextrose : 0,6 % environ en poids.

5. Sauce alimentaire de type mayonnaise selon l'une quelconque des revendications 1 à 4, caractérisée en ce que l'huile utilisée est une huile végétale du type colza, tournesol, arachide ou pépin de raisin.

6. Sauce alimentaire de type mayonnaise selon l'une quelconque des revendications 1 à 5, caractérisée en ce qu'elle est préparée à l'aide de vinaigre coloré.

7. Sauce alimentaire de type mayonnaise selon l'une quelconque des revendications 1 à 6, caractérisée en ce qu'elle comprend des colorants et conservateurs.

8. Préparation alimentaire caractérisée en ce qu'elle comporte, à titre de constituant de base, la sauce de type mayonnaise selon l'une quelconque des revendications 1 à 7.

9. Procédé de préparation d'une sauce alimentaire de type mayonnaise selon l'une quelconque des revendications 1 à 7, caractérisé en ce qu'il consiste :
- a mélanger le blanc d'oeuf et la moutarde, quelques secondes, au fouet ou au batteur, à vitesse lente,
- à passer ensuite à une vitesse de brassage rapide en incorporant l'huile progressivement.

10. Procédé selon la revendication 9, caractérisé en ce qu'il consiste à ajouter le vinaigre, acide acétique ou jus de citron et les condiments ou similaires, avant ou pendant la première phase de brassage à vitesse lente.

## Claims

1. Mayonnaise-type edible sauce, characterized in that it consists of an emulsion comprising :
- oil : 70 to 80 wt. %
- mustard : 4 to 10 wt %
- egg white : 1 to 15 wt %
- an emulsifying agent : 0.1 to 10 wt %
the total of these ingredients being equal to 100% by weight.

2. Mayonnaise-type edible sauce according to claim 1, characterized in that it also contains :
- vinegar, acetic acid or lemon juice : 0 to 6 wt %
- seasoning, spices, flavoring agents, or similar : 0 to 5 wt %
- a thickener agent (for example cassava starch at a concentration of 0 to 1 wt %)
- dextrose or similar : 0 to 1 wt %
- water : 0 to 16 wt %

3. Mayonnaise-type edible sauce according to one of claims 1 or 2, characterized in that it comprises :
- vegetable oil : 75 to 79 wt %
- mustard : 6 to 9 wt %
- egg white : 3 to 10 wt %
- emulsifying agent : 0.3 to 1 wt %
- vinegar, acetic acid or lemon juice : 0 to 6 wt %
- seasoning or similar : 0 to 5 wt %
- water : 0 to 10 wt %
- a thickener agent (cassava starch): 0 to 1 wt %
- dextrose : 0 to 1 wt %

4. Mayonnaise-type edible sauce according to any one of claims 1 to 3, characterized in that it comprises :
- vegetable oil : about 77 wt %
- mustard : about 8 wt %
- egg white : about 5.6 wt %
- emulsifying agent : about 0.5 wt %
- cassava starch : about 0.2 wt %
- water : about 7.8 wt %
- salt and pepper : about 0.3 wt %
- dextrose : about 0.6 wt %

5. Mayonnaise-type edible sauce according to any one of claims 1 to 4, characterized in that the oil used is a vegetable oil of the rapeseed, sunflower, peanut or grapeseed type.

6. Mayonnaise-type edible sauce according to any one of claims 1 to 5, characterized in that it is prepared with a colored vinegar.

7. Mayonnaise-type edible sauce according to any one of claims 1 to 6, characterized in that it contains colorants and preservatives.

8. Food composition characterized in that it contains, as its basic constituent, the mayonnaise-type edible sauce according to any one of claims 1 to 7.

9. Method of preparation of a mayonnaise-type edible sauce according to any one of claims 1 to 7, characterized in that it consists of :
- mixing the egg white and the mustard, for a few seconds, with a whisk or beater, at slow speed,
- then changing to a high beating speed while gradually adding the oil.

10. Method according to claim 9, characterized in that it consists of adding the vinegar, acetic acid or lemon juice and the seasoning or similar, before or during the initial low-speed beating phase.

## Patentansprüche

1. Mayonnaiseähnliche Soße, dadurch gekennzeichnet, daß sie aus einer Emulsion besteht, die umfaßt:
Öl: 70 bis 80 Gew.%,
Senf: 4 bis 10 Gew.%,
Eiweiß: 1 bis 15 Gew.%,
ein Emulgierungsmittel: 0,1 bis 10 Gew.%,
wobei die Summe der verschiedenen Prozentsätze 100 Gew.% ergibt.

2. Mayonnaiseähnliche Soße nach Anspruch 1, dadurch gekennzeichnet, daß sie darüber hinaus enthält:
Essig, Essigsäure oder Zitronensaft: 0 bis 6 Gew.%,
Würzmittel, Gewürze, aromatisierende Substanzen oder dergleichen:
0 bis 5 Gew.%,
ein Verdickungsmittel (beispielsweise Manioc-Stärke in einem Verhältnis von 0 bis 1 Gew.%),
Dextrose oder dergleichen: 0 bis 1 Gew.%,
Wasser: 0 bis 16 Gew.%.

3. Mayonnaiseähnliche Soße nach Anspruch 1 oder 2, dadurch gekennzeichnet, daß sie besteht aus:
Pflanzenöl: 75 bis 79 Gew.%,
Senf: 6 bis 9 Gew.%,
Eiweiß: 3 bis 10 Gew.%,
Emulgierungsmittel: 0,3 bis 1 Gew.%,
Essig, Essigsäure oder Zitronensaft: 0 bis 6 Gew.%,
Würzmittel oder dergleichen: 0 bis 5 Gew.%,
Wasser: 0 bis 10 Gew.%,
Verdickungsmittel (Manioc-Stärke): 0 bis 1 Gew.%,
Dextrose: 0 bis 1 Gew.%.

4. Mayonnaiseähnliche Soße nach einem der Ansprüche 1 bis 3, dadurch gekennzeichnet, daß sie besteht aus :
Pflanzenöl: ca. 77 Gew.%,
Senf: ca. 8 Gew.%,
Eiweiß: ca. 5,6 Gew.%,
Verdickungsmittel: ca. 0,5 Gew.%,
Manioc-Stärke: ca. 0,2 Gew.%,
Wasser: ca. 7,8 Gew.%,
Salz und Pfeffer: ca. 0,3 Gew.%,
Dextrose: ca. 0,6 Gew.%.

5. Mayonnaiseähnliche Soße nach einem der Ansprüche 1 bis 4, dadurch gekennzeichnet, daß das verwendete Öl ein Pflanzenöl ist vom Typ Rapsöl, Lackmusöl, Erdnußöl oder Traubenkernöl.

6. Mayonnaiseähnliche Soße nach einem der Ansprüche 1 bis 5, dadurch gekennzeichnet, daß sie mit Hilfe von gefärbtem Essig zubereitet ist.

7. Mayonnaiseähnliche Soße nach einem der Ansprüche 1 bis 6, dadurch gekennzeichnet, daß sie Farbstoffe und Konservierungsmittel enthält.

8. Nahrungsmittelpräparat, dadurch gekennzeichnet, daß es als Basisgrundstoff eine mayonnaiseähnliche Soße nach einem der Ansprüche 1 bis 7 enthält.

9. Verfahren zum Herstellen einer mayonnaiseähnlichen Soße nach einem der Ansprüche 1 bis 7, dadurch gekennzeichnet, daß es umfaßt:
Mischen von Eiweiß und Senf durch Rühren oder Schlagen bei geringer Geschwindigkeit über einige Sekunden,
Übergehen zu einer raschen Rührgeschwindigkeit unter progressivem Zuführen des Öls.

10. Verfahren nach Anspruch 9, dadurch gekennzeichnet, daß der Essig, die Essigsäure oder der Zitronensaft und die Würzmittel oder dergleichen vor oder während der ersten Phase des Rührens mit langsamer Geschwindigkeit zugefügt werden.
